Europäisches Patentamt

European Patent Office

Office européen des brevets

(11) Veröffentlichungsnummer: **0 182 100**
**B1**

(12) **EUROPÄISCHE PATENTSCHRIFT**

(45) Veröffentlichungstag der Patentschrift: **16.05.90**

(21) Anmeldenummer: **85113153.2**

(22) Anmeldetag: **17.10.85**

(51) Int. Cl.⁵: **A 01 B 63/10, F 15 B 11/05,**
**F 15 B 13/01**

(54) **Hydraulische Steuereinrichtung**

(30) Priorität: **16.11.84 DE 3441946**

(43) Veröffentlichungstag der Anmeldung:
**28.05.86 Patentblatt 86/22**

(45) Bekanntmachung des Hinweises auf die
Patenterteilung:
**16.05.90 Patentblatt 90/20**

(84) Benannte Vertragsstaaten:
**DE FR GB IT**

(56) Entgegenhaltungen:
**EP-A-0 115 590**
**EP-A-0 149 743**
**EP-A-0 176 679**

(73) Patentinhaber: **ROBERT BOSCH GMBH**
**Postfach 50**
**D-7000 Stuttgart 1 (DE)**

(72) Erfinder: **Aichele, Hans, Dipl.-Ing.**
**Hänflingweg 31**
**D-7000 Stuttgart 31 (DE)**
Erfinder: **Beck, Walter, Dipl.-Ing.**
**Vöhingerweg 3**
**D-7141 Schwieberdingen (DE)**
Erfinder: **Schwerin, Günther**
**Hohenstaufenstrasse 15**
**D-7141 Möglingen (DE)**

**Beschreibung**

Die Erfindung geht aus von einer hydraulischen Steuereinrichtung für ein von einem Hydromotor angetriebenes, insbesondere an einem landwirtschaftlichen Fahrzeug angebautes Arbeitsgerät nach der Gattung des Hauptanspruchs. Es ist schon eine solche proportional arbeitende Steuereinrichtung aus der DE-OS 33 18 052 bekannt, bei der dem Steuerschieber zur Steuerung eines einfachwirkenden Krafthebers ein als Druckkompensationsventil und Druckminderer arbeitendes Drosselventil vorgeschaltet ist und bei dem ein Sperrblock den Kraftheber absichert. Diese Steuereinrichtung ist in einer Bauart für geschlossenen Kreis ausgeführt und erlaubt eine lastdruckkompensierte Steuerung. Es kann nun von Nachteil sein, daß eine stromauf vom Steuerschieber abzweigende Steuerleitung über eine Steuerkammer geführt ist, die zwischen einer ersten, dem zum Kraftheber hinfließenden Druckmittelstrom zugeordneten Arbeitskammer und einer Ablaufkammer liegt, welche dem vom Kraftheber zum Tank abfließenden Druckmittelstrom zugeordnet ist. Die Steuerleitung führt im Gehäuse stromabwärts von der Steuerkammer über eine Druckteilerschaltung aus zwei Drosselstellen und über eine Rücklaufkammer zum Tank. Durch diese Steuerölstromführung kann bei vorliegender Steuereinrichtung für geschlossenen Kreislauf nicht das Gehäuse verwendet werden, wie es bei einer ähnlichen Steuereinrichtung für offenen Kreislauf verwendet wird.

Ferner wurde in einer älteren Anmeldung DE-A-34 31 103 bereits eine ähnliche Steuereinrichtung vorgeschlagen, die für einen Offenkreislauf ausgebildet ist und deren Steuerschieber mit einem 3 Wege-Drosselschieber zusammenarbeitet. Bei dieser Steuereinrichtung wird der stromaufwärts vom Steuerschieber abgezweigte Steuerölstrom über einen Federraum am Drosselschieber und danach über eine Steuerkammer des Steuerschiebers geführt, wobei diese Steuerkammer zwischen einer zweiten Arbeitskammer und einer zweiten Rücklaufkammer liegt. Dadurch lassen sich bei vorliegender Steuereinrichtung vorteilhafte Arbeitsweisen erzielen, indem z.B. in Senkenstellung der Steuerdruck zum Entsperren des Sperrblocks angehoben werden kann, nur ein Steuerölstrom in Senkenstellung notwendig ist und die Energieverluste in Neutralstellung durch niedrigen Umlaufdruck gering sind. Von Nachteil bei dieser Steuereinrichtung ist, daß sie unter Beibehaltung der ihr eigenen Vorteile nicht für eine Bauart für geschlossenen Kreis verwendet werden kann.

Die erfindungsgemäße Steuereinrichtung mit den kennzeichnenden Merkmalen des Hauptanspruchs hat demgegenüber den Vorteil, daß sie unter Beibehaltung der bisherigen Vorteile und in möglichst einfacher Bauweise eine Ausführung für geschlossenen Kreis ermöglicht, bei der das Gehäuse der Steuereinrichtung für offenen Kreis verwendbar ist. Trotz Verwendung gleicher Gehäuse für unterschiedliche Systeme läßt sich die Steuereinrichtung in besonders zweckmäßiger Weise für verschiedene Varianten ausgestalten. Die Steuereinrichtung läßt sich somit besonders kostengünstig herstellen.

Durch die in den Unteransprüchen aufgeführten Maßnahmen sind vorteilhafte Weiterbildungen und Verbesserungen der im Hauptanspruch angegebenen Steuereinrichtung möglich. Besonders vorteihaft sind Ausbildungen nach den Ansprüchen 2 bis 5, die eine besonders kompakte Bauweise der Steuereinrichtung ermöglichen, indem die Anzahl der Kammern am Steuerschieber relativ gering gehalten wird. Die geringe Anzahl der Kammern bedingt dabei ein vorgespanntes Rückschlagventil in einer Arbeitsleitung zwischen Steuerschieber und Sperrblock, das in Senkenstellung einen Abfluß von Steueröl zum Tank verhindert. Besonders vorteilhaft sind ferner Bauarten nach den Ansprüchen 6 bis 10, wodurch eine energiesparende Wirkungsweise ermöglicht wird, indem der Widerstand des vorgespannten Rückschlagventils in Hebenstellung entfällt. Das für den Kraftheber verfügbare Druckgefälle ist dadurch größer. Weitere vorteilhafte Ausgestaltungen ergeben sich aus den übrigen Ansprüchen, der Beschreibung und der Zeichnung.

Zwei Ausführungsbeispiele der Erfindung sind in der Zeichnung dargestellt und in der nachfolgenden Beschreibung näher erläutert. Die Figur 1 zeigt im wesentlichen einen Längsschnitt durch eine erste hydraulische Steuereinrichtung in vereinfachter Darstellung in Stellung Heben und Figur 2 einen Teil der ersten Steuereinrichtung in Stellung Senken. Die Figur 3 zeigt einen Längsschnitt durch eine zweite Steuereinrichtung in Stellung Neutral.

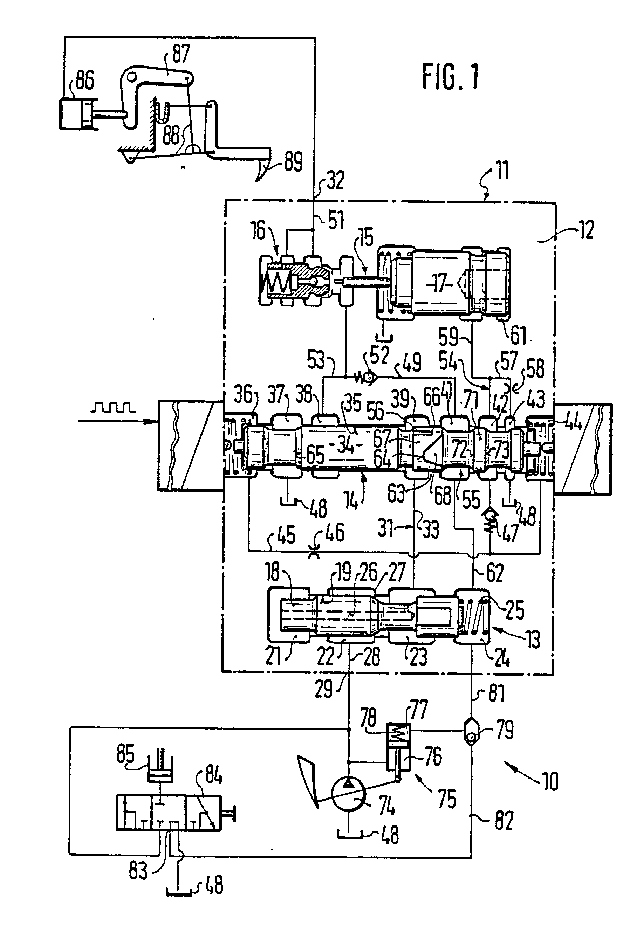

Die Figur 1 zeigt eine Steuereinrichtung 10 mit einem Regelwegeventil 11, das zur Hubwerksregelung an einem landwirtschaftlichen Fahrzeug, insbesondere einem Traktor mit angelenktem Pflug, verwendet wird.

Das Regelwegeventil 11 hat ein Gehäuse 12, in dem in drei zueinander parallelen Achsen ein Drosselventil 13, ein Steuerventil 14 sowie ein Sperrblock 15, bestehend aus Sperrventil 16 und zugehörigem Aufstoßkolben 17, angeordnet sind.

Das Drosselventil 13 hat einen Drosselschieber 18, der im Gehäuse 12 in einer Schieberbohrung 19 gleitet. In der Schieberbohrung 19 sind nebeneinanderliegend, bezogen auf die Figur 1 von links nach rechts gesehen, durch ringförmige Erweiterungen ein Druckraum 21, ein Einlaßraum 22, ein Auslaßraum 23 sowie ein Federraum 24 ausgebildet. Der Drosselschieber 18 wird von einer in dem Federraum 24 angeordneten Feder 25 sowie von den Drücken in dem Federraum 24 und in dem Druckraum 21 beaufschlagt. Zu diesem Zweck steht der Druckraum 21 über im Drosselschieber 18 angeordnete Steuerkanäle 26 mit dem Auslaßraum 23 in Verbindung. Die Feder 25 belastet den Drosselschieber 18 in Richtung einer Ausgangsstellung in welcher eine am Drosselschieber 18 ausgebildete Steuerfase 27 die Verbindung vom Einlaßraum 22 zum Auslaßraum 23 voll aufsteuert.

Der Einlaßraum 22 ist über einen ersten Leitungsabschnitt 28 mit einem Eingang 29 des Regelwegeventils 11 verbunden, von dem eine Arbeitsleitung 31 nacheinander über das Drosselventil 13, das Steuerventil 14 und den Sperrblock 15 zu einem Ausgang 32 führt. Als Teil dieser Arbeitsleitung 31 führt vom Auslaßraum 23 ein zweiter Leitungsabschnitt 33 zum nachfolgenden Steuerventil 14.

Das Steuerventil 14 hat einen Steuerschieber 34, der in einer zweiten Schieberbohrung 35 dicht und gleitend geführt ist. In letzterer (35) sind wiederum nebeneinanderliegend und auf die Figur bezogen von links nach rechts gesehen, eine erste Dämpfungskammer 36, eine erste Rücklaufkammer 37, eine Ablaufkammer 38, eine erste (39) und zweite Arbeitskammer 41, eine Steuerkammer 42, eine zweite Rücklaufkammer 43 sowie eine zweite Dämpfungskammer 44 angeordnet. Die beiden außenliegenden Dämpfungskammern 36, 44 sind über einen Ausgleichskanal 45 und eine darin liegende Drossel 46 miteinander verbunden. Ferner steht der Ausgleichskanal 45 über ein zu ihm hin öffnendes Rückschlagventil 47 mit der Steuerkammer 42 in Verbindung. Beide Rücklaufkammern 37, 43 sind zu einem Tank 48 entlastet. In die erste Arbeitskammer 39 mündet der zweite Leitungsabschnitt 33 der Arbeitsleitung 31. Von der zweiten Arbeitskammer 41 führt ein dritter Leitungsabschnitt 49 als Teil der Arbeitsleitung 31 zum Sperrventil 16, von dem ein vierter Leitungsabschnitt 51 zum Ausgang 32 führt. In den dritten Leitungsabschnitt 49 ist ein die zweite Arbeitskammer 41 absicherndes vorgespanntes Rückschlagventil 52 geschaltet.

Fernerhin führt vom Ausgang 32 über das Sperrventil 16 eine Rücklaufleitung 53 zur Ablaufkammer 38 und weiter über die erste Rücklaufkammer 37 zum Tank 48. Diese Rücklaufleitung 53 ist im Bereich des Sperrventils 16 mit dem vierten Leitungsabschnitt 51 und teilweise mit dem dritten Leitungsabschnitt 49 der Arbeitsleitung 31 identisch. Zudem liegt das vorgespannte Rückschlagventil 52 im dritten Leitungsabschnitt 49 stromaufwärts vor dessen Einmündung in die Rücklaufleitung 53.

Von dem zweiten Leitungsabschnitt 33 der Arbeitsleitung 31, also stromaufwärts vom Steuerschieber 34, zweigt eine zum Tank 48 geführte erste Steuerleitung 54 ab. Diese erste Steuerleitung 54 hat einen ersten Abschnitt 55, der von der ersten Arbeitskammer 39 durch die zweite Arbeitskammer 41 hindurch zur Steuerkammer 42 verläuft und somit innerhalb der Schieberbohrung 35 liegt. Diesem ersten Abschnitt 55 ist eine erste Drosselstelle 56 zugeordnet. Von der Steuerkammer 42 führt ein zweiter Abschnitt 57 der ersten Steuerleitung 54 über eine zweite Drosselstelle 58 in die zweite Rücklaufkammer 43 und damit zum Tank 48. Dieser zweite Abschnitt 57 verläuft im wesentlichen außerhalb der Schieberbohrung 35. Der Druck in der ersten Steuerleitung 54 wird zwischen den beiden Drosselstellen 56 und 58 über eine Abzweigung 59 abgegriffen und einer zugeordneten Druckkammer 61 am Aufstoßkolben 17 zugeführt. Ferner verbindet eine zweite Steuerleitung 62 die zweite Arbeitskammer 41 mit dem Federraum 24 am Drosselschieber 18. In der Schieberbohrung 35 ist der Gehäusesteg zwischen den beiden Arbeitskammern 39 und 41 mit 63 bezeichnet.

Am Steuerschieber 34 selbst ist eine erste Steuerkante 64 ausgebildet, um den über die Arbeitsleitung 31 zufließenden Druckmittelstrom proportional zur Auslenkung des Steuerschiebers 34 zu steuern. Ferner weist der Steuerschieber 34 eine zweite Steuerkante 65 auf, um in entsprechend proportionaler Weise den über die Rücklaufleitung 53 zum Tank 48 abfließenden Druckmittelstrom zu steuern. Außerdem ist am Steuerschieber 34 eine dritte Steuerkante 66 ausgebildet, welche den Steuerölstrom im ersten Abschnitt 55 der ersten Steuerleitung 54 beeinflußt, also im Bereich zwischen der ersten (39) und zweiten Arbeitskammer 41. Die erste (64) und dritte Steuerkante 66 sind am gleichen Kolbenabschnitt 67 des Steuerschiebers 34 ausgebildet, der im Gehäusesteg 63 gleitet. Dabei wird die erste Steuerkante 64 von einer oder mehreren am Umfang des Kolbenabschnitts 67 ausgebildeten Steuerausnehmung 68 gebildet, die zur zweiten Arbeitskammer 41 hin offen ist. Demgegenüber wird die dritte Steuerkante 66 von einer Längsnut 69 gebildet, die zur ersten Arbeitskammer 39 hin sich öffnet. Steuerausnehmung 68 und Längsnut 69 am Kolbenabschnitt 67 haben in Längsrichtung des Steuerschiebers 34 gesehen einen Bereich der Überdeckung; dieser Bereich ist aber gleich oder kleiner als die Breite des Gehäusesteges 63, so daß in einer Neutralstellung des Steuerschiebers 34 die Verbindung zwischen beiden Arbeitskammern 39 und 41 gesperrt ist. Die erste Steuerkante 64 ist so ausgebildet, daß sie in der gezeichneten Hebenstellung die Verbindung zwischen den beiden Arbeitskammern 39, 41 aufsteuert, in einer Senkenstellung dagegen unterbricht. Die erste Steuerleitung 54 über die dritte Steuerkante 66 ist sowohl in Neutralstellung als auch in der gezeichneten Hebenstellung blockiert; dagegen öffnet sie in einer Senkenstellung eine Verbindung zwischen den beiden Arbeitskammern 39, 41. Die Längsnut 69 ist zugleich so ausgebildet, daß sie die zweite Drosselstelle 56 in der ersten Steuerleitung 54 bildet.

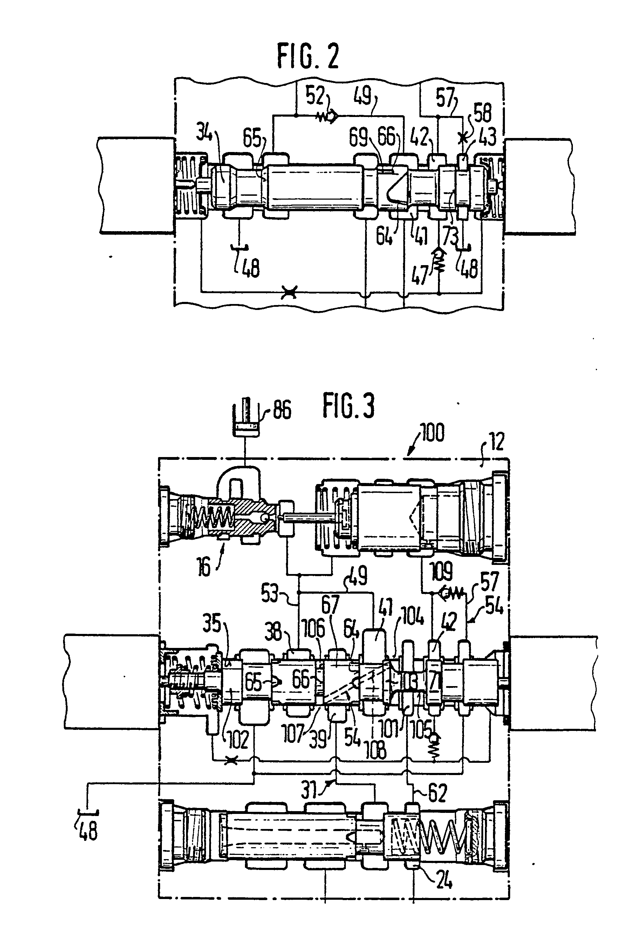

Der Steuerschieber 34 weist einen im Bereich der Steuerkammer 42 liegenden zweiten Kolbenabschnitt 71 auf, der eine vierte (72) sowie eine fünfte Steuerkante 73 trägt. Der Abstand zwischen den beiden Steuerkanten 72, 73 ist kleiner als die Breite der Steuerkammer 42, so daß der zweite Kolbenabschnitt 71 in bezug auf die Steuerkammer 42 mit negativer Überdeckung ausgeführt ist, also eine Verbindung zwischen der zweiten Arbeitskammer 41 und der zweiten Rücklaufkammer 43 über die Schieberbohrung 35 in Neutralstellung besteht. Während in der gezeichneten Hebenstellung die vierte Steuerkante 72 die Verbindung zwischen der zweiten Arbeitskammer 41 und der Steuerkammer 42 unterbricht, hält gleichzeitig die fünfte Steuerkante 73 die Verbindung zwischen letzterer (42) und der zweiten Rücklaufkammer 43 weiterhin offen. In Senkenstellung, wie sie Figur 2 näher zeigt, öffnet die vierte Steuerkante 72 die Verbindung zwischen zweiter Arbeitskammer 41 und Steuerkammer 42, während die fünfte Steuerkante 73 die Verbindung von letzterer (42) zur zweiten Rücklaufkammer 43 blockiert.

Die Steuereinrichtung 10 weist ferner eine Verstellpumpe 74 mit zugehöriger Stelleinrichtung 75 auf, wobei der Ausgang der Verstellpumpe 74 an den Eingang 29 des Regelwegeventils 11 angeschlossen ist. Ein Kolbenstangenraum 76 der Verstelleinrichtung 75 wird vom Ausgangsdruck der Verstellpumpe 74 so beaufschlagt, daß sie in Richtung minimaler Fördermenge verstellt wird. In einem Zylinderraum 77 der Verstelleinrichtung 75 ist eine Reglerfeder 78 angeordnet, welche die Verstellpumpe 74 in Richtung maximaler Fördermenge zu verstellen sucht. Solange im System von den Hydromotoren kein Druckmittel benötigt wird, endet diese Förderstromverstellung entgegen der Kraft der Reglerfeder 78 nahe bei Null, wobei nur noch die Leckverluste im System ausgeglichen werden. Der hierbei von der Verstellpumpe 74 erzeugte und von der Kraft der Reglerfeder 78 abhängige Druck wird als Ausgangsdruck bezeichnet. Ferner steht der Zylinderraum 77 mit einem als Maximaldruck-Auswahlvorrichtung dienenden Wechselventil 79 in Verbindung, das über eine erste Lastdruckleitung 81 mit dem Federraum 24 am Drosselschieber 18 und über eine zweite Lastdruckleitung 82 mit einem Lastdruckanschluß eines zweiten Wegeventils 84 in Verbindung steht, das einen zweiten Hydromotor 85 steuert. Das zweite Wegeventil 84 wird parallel zum Regelwegeventil 11 mit Druckmittel von der Verstellpumpe 74 versorgt und ist ebenfalls für einen geschlossenen Kreislauf ausgebildet.

Der am Ausgang 32 des Regelwegeventils 11 angeschlossene einfachwirkende Hydromotor ist ein Kraftheber 86, der über einen Hubarm 87 und ein übliches Dreipunktgestänge 88 einen am Traktorrahmen angelenkten Pflug 89 betätigen kann.

Die Wirkungsweise der Steuereinrichtung 10 wird wie folgt erläutert, wobei die grundsätzliche Funktion des Regelwegeventils 11 in bezug auf das Zusammenwirken von Steuerschieber 14, Drosselschieber 13 und Sperrblock 15 als an sich bekannt vorausgesetzt wird. Dies gilt sowohl für die Funktion des Regelwegeventils 11 für sich allein als auch für den Parallelbetrieb zusammen mit dem zweiten Wegeventil 84. Im folgenden wird deshalb vor allem auf die unterschiedlichen Steuerverbindungen durch den Steuerschieber 34 eingegangen.

In einer nicht näher gezeichneten Neutralstellung des Regelwegeventils 11 liegen die erste (64) und die dritte Steuerkante 66 so im Gehäuseabschnitt 63, daß keine Verbindung zwischen den beiden Arbeitskammern 39 und 41 besteht. Es kann daher kein Arbeitsstrom über die Arbeitsleitung 31 in Richtung Kraftheber 86 fließen; auch kann über die dritte Steuerkante 66 kein Steuerölstrom aus der ersten Arbeitskammer 39 abgezweigt werden. Ferner liegt der zweite Kolbenabschnitt 71 in der Neutralstellung des Steuerschiebers 34 innerhalb der Steuerkammer 42, so daß die vierte (72) und fünfte Steuerkante 73 eine Verbindung von der zweiten Arbeitskammer 41 durch die Schieberbohrung 35 hindurch über die Steuerkammer 42 zur zweiten Rücklaufkammer 43 herstellen. Über diese Verbindung ist somit der Federraum 25 am Drosselschieber 18 zum Tank 48 entlastet. Dementsprechend ist auch der Zylinderraum 77 über das Wechselventil 79 entlastet, so daß die Verstellpumpe 74 nur ihren niedrigen Ausgangsdruck erzeugt, um Leckverluste im System auszugleichen und der Reglerfeder 78 das Gleichgewicht zu halten. In Neutralstellung des Steuerschiebers 34 ist zugleich auch die Druckkammer 61 am Aufstoßkolben 17 zum Tank 48 entlastet, so daß der Sperrblock 15 nicht unbeabsichtigt geöffnet werden kann.

In Figur 1 ist der Steuerschieber 34 in seiner Hebenstellung dargestellt, in die er durch elektromagnetische Betätigung aus seiner Neutralstellung heraus durch Auslenkung nach links verstellbar ist. Die erste Steuerkante 64 öffnet eine Verbindung von der ersten Arbeitskammer 39 zur zweiten Arbeitskammer 41, so daß proportional zur Auslenkung des Steuerschiebers 34 ein Druckmittelstrom über die Arbeitsleitung 31 zum Kraftheber 86 fließen kann. Die hierbei über die Steuerausnehmung 68 wirksame Druckdifferenz wird in an sich bekannter Weise von der Reglerfeder 78 bzw. im Parallelbetrieb von der nur geringfügig stärkeren Feder 25 am Drosselschieber 18 bestimmt, so daß eine lastdruckkompensierte Steuerung auch im Parallelbetrieb möglich ist, wie dies an sich aus der eingangs erwähnten DE-OS 33 18 052 hervorgeht. In Hebenstellung unterbricht die vierte Steuerkante 72 die erste Steuerleitung 54, so daß sich der Lastdruck vom Kraftheber 86 über die zweite Arbeitskammer 41 und die zweite Steuerleitung 62 auch im Federraum 24 aufbauen kann. Zugleich ermöglicht die fünfte Steuerkante 73 eine ungedrosselte Entlastung der Druckkammer 61 am Aufstoßkolben 17 zum Tank 48. Zudem ist in Hebenstellung die dritte Steuerkante 66 zugesteuert. Im übrigen entspricht die Funktion des Regelwegeventils 11 in Hebenstellung derjenigen der vorbekannten Bauart in sogenannter closed-center-Ausführung.

Für eine Senkenstellung des Regelwegeventils 11 wird der Steuerschieber 34 in die in Figur 2 gezeigte Stellung gebracht, wozu er aus seiner Neutralstellung nach rechts ausgelenkt wird. Dabei wird nun die erste Steuerkante 64 im Bereich des Gehäusesteges 63 zugesteuert, während die dritte Steuerkante 66 öffnet. Somit kann aus der ersten Arbeitskammer 39 ein Steuerölstrom abzweigen und über die Längsnut 69, durch die zweite Arbeitskammer 41 hindurch in die Steuerkammer 42 und weiter über den zweiten Abschnitt 57 der ersten Steuerleitung 54 zum Tank 48 strömen. Hierbei arbeitet die Längsnut 69 zugleich als erste Drosselstelle 56 in der ersten Steuerleitung 54, die mit dem Drosselschieber 18 nach Art eines Stromregelventils zusammenarbeitet und damit den Steuerölstrom begrenzt. Durch diese Funktion des Drosselschiebers 18 als Stromregler wird in vorteilhafter Weise eine Ausbildung der druckanhebenden Mittel in der Steuerleitung als Druckhalteventil (siehe Figur 3) ermöglicht, wodurch der Entsperrdruck am Aufstoßkolben 17 auch während dessen Bewegung genau eingehalten wird. Der nach Figur 1 von der zweiten Drosselstelle 58 im zweiten Abschnitt 57 angedrosselte Zwischendruck baut sich über die Abzweigung 59 in der Druckkammer 61 auf, so daß mit Hilfe des Aufstoßkolbens 17 das vorgesteuerte Sperrventil 16 geöffnet werden kann. Vom Kraftheber 86 fließt somit über das geöffnete Sperrventil 16 und die Rücklaufleitung 53 ein Druckmittelstrom zum Tank 48 ab, dessen Größe von der zweiten Steuerkante 65 proportional zur Auslenkung des Steuerschiebers 34 beeinflußt wird. Die Vorspannung am Rückschlagventil 52 in dem dritten Leitungsabschnitt 49 wird so groß gewählt, daß der zum Betätigen des Aufstoßkolbens 17 erforderliche Steuerdruck zumindest geringfügig darunterliegt, so daß während des Senkenvorganges kein Steuerdruckmittel über das vorgespannte Rückschlagventil 52 und die Rücklaufleitung 53 zum Tank entweicht. In Senkenstellung sperrt die fünfte Steuerkante 73 die Verbindung zwischen der Steuerkammer 42 und der zweiten Rücklaufkammer 43 ab, so daß der Steuerölstrom über die zweite Drosselstelle 58 in der ersten Steuerleitung 54 gezwungen wird. Der in der Steuerkammer 42 aufgebaute Zwischendruck gelangt über das Rückschlagventil 47 und den Ausgleichskanal 45 auch in die beiden äußeren Dämpfungskammern 36, 44 und baut sich dort auf. Mit Hilfe von Leckölströmen aus den äußeren Dämpfungskammern 36, 44 in die benachbarten Rücklaufkammern 37, 43 wird für eine ausreichende Entlüftung dieser Kammern gesorgt.

Bei vorliegender Steuereinrichtung 10 kann somit durch den speziellen Abgriff des Steuerölstroms aus der ersten Arbeitskammer 39 in Kombination mit dessen spezieller Führung durch die Schieberbohrung 35 hindurch bei entsprechender Ausgestaltung des Steuerschiebers 34 für das Regelwegeventil 11 in einer Ausführung für geschlossenen Kreis ein Gehäuse 12 verwendet werden, bei dem die Steuerkammer 42 im Bereich zwischen der zweiten Arbeitskammer 41 und der zweiten Rücklaufkammer 43 liegt und somit jenem Gehäuse entspricht, wie es bei einem Regelwegeventil für offenen Kreis verwendet wird. Zudem lassen sich die Vorteile der Bauweise für offenen Kreis beibehalten und mit relativ einfachen baulichen Mitteln realisieren. Die Verwendung gleicher Gehäuse für unterschiedliche Bauarten führt ferner zu kostengünstigen Lösungen.

Die Figur 3 zeigt eine zweite Steuereinrichtung 100, die sich von der ersten Steuereinrichtung nach Figur 1 wie folgt unterscheidet, wobei gleiche Bauelemente mit gleichen Bezugzeichen versehen sind.

Bei der zweiten Steuereinrichtung 100 entfällt vor allem das vorgespannte Rückschlagventil 52 in dem dritten Leitungsabschnitt 49, welches in Stellung Senken den zum Betätigen des Aufstoßkolbens dienenden Steuerölstrom von dem vom Kraftheber zum Tank abfließenden Rücklaufstrom trennt. Diese Trennfunktion ist nunmehr in die Achse des Steuerschiebers integriert, wozu in dessen Schieberbohrung 35 eine zweite Steuerkammer 101 ausgebildet ist und der Steuerschieber 102 einen zusätzlichen Hilfskolbenabschnitt 103 aufweist. Während der dritte Leitungsabschnitt 49 weiterhin in die zweite Arbeitskammer 41 mündet, ist die zweite Steuerleitung 62 nunmehr an die zweite Steuerkammer 101 angebunden. Die zweite Steuerkammer 101 liegt zwischen der zweiten Arbeitskammer 41 und der ersten Steuerkammer 42. Der Hilfskolbenabschnitt 103 liegt in der gezeichneten Neutralstellung sowie auch in der Stellung Senken im Bereich eines zweiten Gehäusesteges 104 zwischen der zweiten Arbeitskammer 41 und der zweiten Steuerkammer 101 und unterbricht die Verbindung zwischen den beiden zuletzt genannten Kammern 41, 101. Der Hilfskolbenabschnitt 103 ist durch eine Eindrehung 105 vom zweiten Kolbenabschnitt 71 getrennt.

Der die erste Steuerkante 64 tragende Kolbenabschnitt 67 weist wie bisher die der anderen Stirnseite zugeordnete dritte Steuerkante 66 auf, die jedoch nunmehr durch eine Ringnut 106 ausgebildet ist. In der gezeichneten Neutralstellung liegt diese Ringnut 106 in einem dritten Gehäusesteg 107, der zwischen der Ablaufkammer 38 und der ersten Arbeitskammer 39 ausgebildet ist. Im Innern des Steuerschiebers 102 verläuft zwischen der Ringnut 106 und der Eindrehung 105 ein als Schrägbohrung ausgebildeter Drosselkanal 108, welcher der ersten Steuerleitung 54 zugeordnet ist und in ihr die Funktion der ersten Drosselstelle 56 übernimmt. Die Funktion der zweiten Drosselstelle im zweiten Abschnitt 57 der ersten Steuerleitung übernimmt ein entsprechend dem am Aufstoßkolben 17 benötigten Druck vorgespanntes Druckventil 109.

Die Wirkungsweise der zweiten Steuereinrichtung 100 entspricht weitgehend derjenigen der ersten Steuereinrichtung 10 und unterscheidet sich von ihr im wesentlichen in folgenden Punkten:

In Hebenstellung wird der Druckmittelstrom von der Verstellpumpe über die Arbeitsleitung 31 zum Kraftheber 86 im wesentlichen ungedrosselt durch den dritten Leitungsabschnitt 49 geführt, so daß der vom vorgespannten Rückschlagventil 52 nach Figur 1 erzeugte Druckabfall von einigen bar entfällt, und damit für den Kraftheber 86 ein größeres Druckgefälle zur Verfügung steht. In Hebenstellung öffnet der Hilfskolbenabschnitt 103 die Verbindung von der zweiten Arbeitskammer 41 zur zweiten Steuerkammer 101, so daß wie bisher die lastdruckkompensierte Steuerung wirksam ist.

In der gezeichneten Neutralstellung des Steuerschiebers 102 ist die Ringnut 106 von den benachbarten Kammern 38 und 39 getrennt. Eventuell in die Ringnut leckendes Drucköl kann über den Drosselkanal 108 zur zweiten Steuerkammer 101 und damit über die aufgesteuerte erste Steuerleitung 54 zum Tank 48 abgeführt werden.

In Stellung Senken des Steuerschiebers 102 verbindet die dritte Steuerkante 66 die Ringnut 106 mit der ersten Arbeitskammer 39. Damit kann von der ersten Arbeitskammer 39 ein Steuerölstrom abgezweigt werden und über die erste Steuerleitung 54 zum Tank 48 strömen. Der Hilfskolbenabschnitt 103 verhindert dabei, daß der über die Rücklaufleitung 53 vom Kraftheber 86 abfließende Rücklaufstrom, dessen Druck sich über den dritten Leitungsabschnitt 49 auch in der zweiten Arbeitskammer 41 aufbaut, mit dem Steuerölstrom in der zweiten Steuerkammer 101 in Berührung kommt. Der von der ersten Arbeitskammer 39 abgezweigte Steuerölstrom muß deshalb im Bereich der Schieberbohrung 35 mit Hilfe des Drosselkanals 108 von der zweiten Arbeitskammer 41 ferngehalten werden, um in die zweite Steuerkammer 101 zu gelangen.

Mit der zweiten Steuereinrichtung 100 läßt sich somit mit Hilfe einer zusätzlichen Kammer in der Schieberachse, nämlich der zweiten Steuerkammer 101, und mit einem etwas aufwendiger bauenden Steuerschieber 102 erreichen, daß für den Betrieb des Krafthebers 86 ein höheres Druckniveau zur Verfügung steht, die Energieverluste also geringer sind. Unabhängig davon kann aber bei der zweiten Steuereinrichtung 100 wieder das gleiche Gehäuse einer Ausführung für offenen Kreis verwendet werden, da auch hier die Steuerkammern 42, 101 im Bereich zwischen der zweiten Arbeitskammer 41 und der zweiten Rücklaufkammer 43 liegen.

Selbstverständlich sind bei den gezeigten Ausführungsformen Änderungen möglich, ohne vom Gedanken der Erfindung abzuweichen. So kann das Steuerventil 14 anstelle der elektromagnetischen Ansteuerung auch z.B. in mechanischer oder hydraulischer Weise angesteuert werden. Zum Aufbau des Entsperrdrucks für den Aufstoßkolben 17 können in der Steuerleitung anstelle der Drosselstelle auch andere druckanhebende Mittel, wie z.B. ein Druckhalteventil, verwendet werden.

## Patentansprüche

1. Hydraulische Steuereinrichtung (10) für ein von einem Hydromotor (86) angetriebenes, insbesondere an einem landwirtschaftlichen Fahrzeug angebautes Arbeitsgerät (89) mit einem aus Sperrventil (16) und Aufstoßkolben (17) bestehenden Sperrblock (15), mit einem den Sperrblock (15) steuernden Steuerschieber (34), der zudem eine den Druckmittelstrom zum Hydromotor (86) beim Heben beeinflussende, erste Steuerkante (64) und eine den vom Hydromotor (86) zum Tank (48) abfließenden Druckmittelstrom beim Senken beeinflussende zweite Steuerkante (65) aufweist sowie mit einem dem Steuerschieber (34) vorgeschalteten, von einer in einem Federraum (24) angeordneten Feder (25) belasteten Drosselschieber (18), der in eine Arbeitsleitung (31) geschaltet ist, die von einem Eingang (29) der Steuereinrichtung (10) über den Drosselschieber (18), die erste Steuerkante (64) am Steuerschieber (34) und das Sperrventil (16) zum Hydromotor (86) geführt ist und der eine lastdruckunabhängige Steuerung ermöglicht, wobei in Senkenstellung des Steuerschiebers (34) über den Drosselschieber (18) eine von der Arbeitsleitung (31) stromaufwärts des Steuerschiebers (34) abzweigende und über eine dritte Steuerkante (66) am Steuerschieber (34), eine Steuerkammer (42) und eine zweite, der Steuerstromseite zugeordnete Rücklaufkammer (43) zum Tank geführte Steuerleitung (54) mit Steuerdruckmittel versorgt wird, wobei von zwei, der zweiten Rücklaufkammer (43) in der Steuerleitung (54) vorgeschalteten Drosselstellen (56, 58) die stromabwärts liegende Drosselstelle (58) einen zur Betätigung des Aufstoßkolbens (17) dienenden Druck aufbaut, und mit einer vom Steuerschieber (34) durchdrungenen ersten und zweiten Arbeitskammer (39, 41) in der Arbeitsleitung (31), deren Verbindung miteinander die erste Steuerkante (64) überwacht und von denen die zweite Arbeitskammer (41) zwischen der ersten Arbeitskammer (39) und der zweiten Rücklaufkammer (43) angeordnet ist und bei welcher Steuereinrichtung (10) der Federraum (24) am Drosselschieber (18) in Neutralstellung des Steuerschiebers (34) unter Umgehung der Drosselstellen (56, 58) der Steuerleitung (54) mit der zweiten Rücklaufkammer (43) sowie mit einem Steuerdruckanschluß verbunden ist, dadurch gekennzeichnet, daß die dem Steuerschieber (34, 102) zugeordnete Steuerkammer (42) zwischen der zweiten Arbeitskammer (41) und der zweiten Rücklaufkammer (43) angeordnet ist und daß der Abschnitt (55) der Steuerleitung (54) zwischen erster Arbeitskammer (39) und Steuerkammer (42) im Bereich der Schieberbohrung (35) des Steuerschiebers (34, 102) durch die zweite Arbeitskammer (41) hindurchgeführt ist.

2. Steuereinrichtung nach Anspruch 1, dadurch gekennzeichnet, daß die zweite Arbeitskammer (41) insbesondere unmittelbar neben der Steuerkammer (42) liegt und in der Arbeitsleitung (31) zwischen Steuerschieber (34) und Sperrblock (15) ein parallel zum Rücklaufstrom vom Hydromotor (86) geschaltetes, vorgespanntes Rückschlagventil (52) liegt und daß der die erste Steuerkante (64) tragende Kolbenabschnitt (67) die dritte Steuerkante (66) aufweist, so daß diese beiden Steuerkanten (64, 66) dem Gehäusesteg (63) zwischen beiden Arbeitskammern (39, 41) zugeordnet sind (Figur 1).

3. Steuereinrichtung nach Anspruch 2, dadurch gekennzeichnet, daß die erste (64) und dritte Steuerkante (66) am Umfang des Kolbenabschnitts (67) ausgebildete, voneinander getrennte, zu entgegengesetzten Seiten hin offene Steuerausnehmungen (68, 69) sind, deren gegenseitige Überdeckung höchstens gleich oder kleiner ist als die Breite des zugeordneten Gehäusestegs (63).

4. Steuereinrichtung nach einem der Ansprüche 1 bis 3, dadurch gekennzeichnet, daß der Federraum (24) am Drosselschieber (18) mit der zweiten Arbeitskammer (41) verbunden ist.

5. Steuereinrichtung nach einem der Ansprüche 3 bis 4, dadurch gekennzeichnet, daß die erste Steuerkante (64) als Steuerausnehmung (68) und die dritte Steuerkante (66) an einer Längsnut (69) ausgebildet sind.

6. Steuereinrichtung nach Anspruch 1, dadurch gekennzeichnet, daß die zweite Arbeitskammer (41) ohne Zwischenschaltung von drucksteuernden Mitteln unmittelbar mit dem Sperrventil (16) und parallel dazu mit einer zwischen erster Arbeitskammer (39) und erster Rücklaufkammer (37) liegenden Ablaufkammer (38) Verbindung hat, daß zwischen zweiter Arbeitskammer (41) und erster Steuerkammer (42) eine zweite Steuerkammer (101) angeordnet ist, die mit dem Federraum (24) am Drosselschieber (18) verbunden ist, daß der Steuerschieber (102) einen in Senkenstellung die Verbindung zwischen zweiter Arbeitskammer (41) und zweiter Steuerkammer (101) unterbrechenden Hilfskolbenabschnitt (103) aufweist und daß den die erste Steuerkante (64) tragenden Kolbenabschnitt (67) und den Hilfskolbenabschnitt (103) ein Drosselkanal (108) durchdringt (Figur 3).

7. Steuereinrichtung nach Anspruch 6, dadurch gekennzeichnet, daß der Steuerschieber (102) im Bereich zwischen erster Arbeitskammer (39) und Ablaufkammer (38) eine Ringnut (106) aufweist, von der der Drosselkanal (108) ausgeht und daß diese Ringnut (106) in Heben- und Neutralstellungen von der ersten Arbeitskammer (39) getrennt und in Senkenstellung mit ihr verbunden ist.

8. Steuereinrichtung nach Anspruch 6 oder 7, dadurch gekennzeichnet, daß der Drosselkanal (108) im Steuerschieber (102) in eine Eindrehung (105) zwischen Hilfskolbenabschnitt (103) und zweiten Kolbenabschnitt (71) mündet.

9. Steuereinrichtung nach einem oder mehreren der Ansprüche 1 bis 8, dadurch gekennzeichnet, daß der Steuerschieber (34; 102) im Bereich der ersten Steuerkammer (42) einen zweiten Kolbenabschnitt (71) mit einer vierten (72) und fünften Steuerkante (73) aufweist, der in einer Neutralstellung des Steuerschiebers (34; 102) eine Entlastung des Federraums (24) am Drosselschieber (18) unter Umgehung der druckerhöhenden Mittel (58, 109) in der ersten Steuerleitung (54) zum Tank (48) steuert, in Hebenstellung den Druck in der Arbeitsleitung (31) stromabwärts der ersten Steuerkante (64) in den Federraum (24) weiterleitet und in Senkenstellung den Steuerölstrom über die druckerhöhenden Mittel (58, 109) in der ersten Steuerleitung (54) zwingt (Figur 1 und 3).

10. Steuereinrichtung nach einem oder mehreren der Ansprüche 1 bis 9, dadurch gekennzeichnet, daß dem Steuerschieber (34; 102) zwei Dämpfungskammern (36, 44) zugeordnet sind, daß diese über einen Ausgleichskanal (45) mit einer darin liegenden Drossel (46) miteinander verbunden sind und daß die erste Steuerkammer (42) über ein zum Ausgleichskanal (45) hin öffnendes Rückschlagventil (47) mit dem Ausgleichskanal (45) verbunden ist.

11. Steuervorrichtung nach einem oder mehreren der Ansprüche 1 bis 10, dadurch gekennzeichnet, daß der Drosselschieber (18) Teil eines 2-Wege-Ventils ist, das von einer Verstellpumpe (74) mit Druckmittel versorgt wird, dessen Regler (75) über eine Maximaldruck-Auswahlvorrichtung (79) mit dem Steueranschluß (81) der Steuereinrichtung (11) und mit dem Lastdruckanschluß (83) eines zweiten, von der Verstellpumpe (74) parallel versorgten Verbraucherkreises (84, 85) Verbindung hat.

12. Steuervorrichtung nach einem oder mehreren der Ansprüche 1 bis 11, dadurch gekennzeichnet, daß der Drosselschieber (18) in Stellung Senken als Stromregelventil arbeitet und in der ersten Steuerleitung (54) ein Druckhalteventil (109) den Entsperrdruck androsselt.

## Revendications

1. Dispositif de commande hydraulique (10) pour un outil de travail (89) entraîné par un moteur hydraulique (86) et notamment monté sur un véhicule agricole avec un bloc d'arrêt (15), constitué par une soupape d'arrêt (16) et un piston de refoulement (17) avec un tiroir de commande (34) commandant le bloc d'arrêt (15), qui présente en outre une première arête de commande (64) agissant lors du levage par le courant d'agent de pression allant vers le moteur hydraulique et une deuxième arête de commande (65) agissant lors de l'abaissement sur le courant d'agent de pression revenant du moteur hydraulique vers le réservoir (48), avec, en plus, un tiroir d'étranglement (18), monté en amont du tiroir de commande (34) et chargé par un ressort (25) disposé dans une chambre à ressort (24), ce tiroir 18 étant monté dans une conduite de travail (31), laquelle mène de l'entrée (29) du dispositif de commande (10) au moteur hydraulique (86) par l'intermédiaire du tiroir d'étranglement (18), de la première arête de commande (64) du tiroir de commande (34) et de la soupape d'arrêt (16) et ce tiroir permet une commande indépendante de la pression, de charge, en position d'abaissement du tiroir de commande (34) au moyen du tiroir d'étranglement (18), est alimentée, en agent de pression de commande, une deuxième conduite de commande (54) menant au réservoir, qui est dérivée de la conduite de travail (31) en amont du tiroir de commande et passe par une troisième arête de commande (66) du tiroir de commande (34), une chambre de commande (42) et une seconde chambre de retour (43) associé au côté du fluide de commande, et parmi deux points d'étranglement 56, 58 montés dans la conduite de commande 54 en amont de la seconde chambre de retour (43) celui des points d'étranglement (58) qui se trouve en amont établit une pression servant à actionner le piston de refoulement (17) et surveille par la première arête de commande (64), la liaison d'une première et d'une seconde chambre de travail (39, 41) dans la conduite (31) chambres traversées par le tiroir (34) et la seconde chambre (41) est prévue entre la première chambre (39) et la seconde chambre de retour (43), et dans ce dispositif de commande (10) la chambre à ressort (24) est reliée au niveau du tiroir d'étranglement (18) en position neutre du tiroir de commande (34) en contournant les points d'étranglement (56, 58) de la conduite de commande (54) avec la seconde chambre de retour (43) ainsi qu'avec un raccordement de pression de commande, caractérisé en ce que la chambre de commande (42) affectée au tiroir de commande (34, 102) est disposée entre la deuxième chambre de travail (41) et la deuxième chambre de retour (42) et en ce que la partie (55) de la conduite de commande (54) située entre la première chambre de travail (59) et la chambre de commande (42) est guidée à travers la deuxième chambre de travail (41) dans la région d'alésage (35) du tiroir de commande (34, 102).

2. Dispositif de commande selon la revendication 1, caractérisé en ce que la deuxième chambre de travail (41) notamment se trouve immédiatement à côté de la chambre de commande (42), en ce que sur la conduite de travail (31) entre le tiroir de commande (34) et le bloc d'arrêt (15) une soupape de retenue précontrainte (52) montée parallèlement au courant de retour du moteur hydraulique (86) et en ce que la partie de piston (67) portant la première arête de commande (64) présente la troisième arête de commande (66), de telle sorte que ces deux arêtes de commande (64, 66) sont adjointes à la traverse du carter (63) située entre les deux chambres de travail (39, 41) (figure 1).

3. Dispositif de commande selon la revendication 2, caractérisé en ce que la première (64) et la troisième arête de commande (66) sont des évidements de commande (68, 69) ouverts en direction des côtés opposés, constitués sur le pourtour du segment de piston (67) et séparés l'un de l'autre, dont le recouvrement mutuel est au plus égal ou inférieur à la largeur de la traverse du carter adjointe (63).

4. Dispositif de commande selon l'une des revendications 2 à 3, caractérisé en ce que la chambre à ressort (24) du tiroir d'étranglement (18) est en relation avec la deuxième chambre de travail (41).

5. Dispositif de commande selon l'une des revendications 3 à 4, caractérisé en ce que la première arête de commande (64) est constituée sous forme d'un évidement de commande (68) et la troisième arête de commande (66) sur une gorge longitudinale (69).

6. Dispositif de commande selon la revendication 1, caractérisé en ce que la deuxième chambre de travail (41) est, sans interruption de moyens de commande de la pression, directement reliée à la soupape d'arrêt (16) et en parallèle avec celle-ci, à une chambre d'écoulement (38) située entre la première chambre de travail (39) et la première chambre de retour (37), en ce qu'il est disposé entre la deuxième chambre de travail (41) et la première chambre de commande (42) une deuxième chambre de commande (101), qui est reliée à la chambre à ressort du tiroir d'étranglement (18), en ce que le tiroir de commande (102) présente une partie de piston auxiliaire (103) interrompant en position d'abaissement la communication entre la deuxième chambre de travail (41) et la deuxième chambre de commande (101) et en ce qu'un canal d'étranglement (108) traverse la partie de piston (67) portant la première arête de commande (64) et la partie de piston auxiliaire (103) (figure 3).

7. Dispositif de commande selon la revendication 6, caractérisé en ce que le tiroir de commande (102) présente dans la zone située entre la première chambre de travail (39) et la chambre d'écoulement (38) une gorge annulaire (106) dont part le canal d'étranglement (108) et en ce que cette gorge annulaire (106) est, dans les positions de levage et autre, séparée de la première chambre de travail (39) est reliée à celle-ci en position d'abaissement.

8. Dispositif de commande selon la revendication 6 ou 7, caractérisé en ce que le canal d'étranglement (108) aménagé dans le tiroir de commande (102) débouche dans une gorge tournée (105) entre la partie de piston auxiliaire (103) et une deuxième partie de piston (71).

9. Dispositif de commande selon l'une ou plusieurs des revendications 1 à 8, caractérisé en ce que le tiroir de commande (34, 102) présente dans la région de la première chambre de commande (42) une deuxième partie de piston (71) avec une quatrième et une cinquième arête de commande (73) qui, en position neutre du tiroir de commande (34, 102) commande une décharge de la chambre à ressort (24) du tiroir d'étranglement (18), en contournant les moyens d'augmentation de pression (58, 109), dans la première conduite de commande (54) vers le réservoir (48), transmet en position de levage la pression dans la conduite de travail (31) en aval de la première arête de commande (4) à la chambre à ressort (24) et, en position d'abaissement, impose le passage du courant d'huile de commande dans la première conduite de commande (34) (figure 1 et 3) par l'intermédiaire des moyens d'augmentation de la pression.

10. Dispositif de commande selon l'une ou plusieurs des revendications 1 à 9, caractérisé en ce que sont adjoints au tiroir de commande (34, 102) deux chambres d'amortissement (36, 104), en ce que celles-ci sont reliées ensemble par un canal de compensation (45) à un étranglement situé dans celui-ci et en ce que la première chambre de commande (42) est reliée à la commande de compensation (45) par une soupape de retenue (47) s'ouvrant vers le canal de compensation (47).

11. Dispositif de commande selon l'une ou plusieurs des revendications 1 à 10, caractérisé en ce que le tiroir d'étranglement (18) fait partie d'une soupape à deux voies, qui est alimentée en ayant de pression par un pompe de réglage (74), dont le régulateur (75) est en communication au moyen d'un dispositif sélecteur de pression maximale (79), avec le raccord de commande (81) du dispositif de commande (11) et avec le raccord de pression de charge (83) d'un deuxième circuit d'utilisateurs alimenté en parallèle (84, 85) par la pompe de réglage (74).

12. Dispositif de commande selon l'une ou plusieurs revendications 1 à 11, caractérisé en ce que le tiroir d'étranglement (18) travaille en position d'abaissement comme soupape régulatrice de pression et en ce qu'une soupape de maintien (109) modère la pression de déblocage sur la première conduite de commande (54).

**Claims**

1. Hydraulic control device (10) for an implement (89), driven by a hydraulic motor (86) and attached in particular to an agricultural vehicle, with a blocking block (15), consisting of blocking valve (16) and up-thrust piston (17), with a control slide valve (34), controlling the blocking block (15), which control slide valve has moreover a first control edge (64), influencing the pressure medium stream to the hydraulic motor (86) during raising, and a second control edge (65), influencing the pressure medium stream flowing away from the hydraulic motor (86) to the tank (48) during lowering, as well as with a throttle slide valve (18), connected upstream of the control slide valve (34) and loaded by a spring (25) arranged in a spring space (24), which throttle slide valve is connected into a working line (31), which is led from an inlet (29) of the control device (10) via the throttle slide valve (18), the first control edge (64) at the control slide valve (34) and the blocking valve (16) to the hydraulic motor (86) and makes possible a load-pressure independent control, in which device a control line (54), branching off from the working line (31) upstream of the control slide valve (34) and led to the tank via a third control edge (66) at the control slide valve (34), a control chamber (42) and a second return chamber (43), assigned to the control stream side, is supplied with control pressure medium in lowering position of the control slide valve (34) via the throttle slide valve (18), in which device the down-stream-lying throttle point (58) of two throttle points (56, 58), connected upstream of the second return chamber (43) in the control line (54), builds up a pressure serving for the operation of the upthrust piston (17), and with a first and second working chamber (39, 41), penetrated by the control slide valve (34), in the working line (31), the connection of which with each other is monitored by the first control edge (64) and of which the second working chamber (41) is arranged between the first working chamber (39) and the second return chamber (43) and in which control device (10) the spring space (24) at the throttle slide valve (18) is connected in neutral position of the control slide valve (34), with bypassing of the throttle points (56, 58) of the control line (54), to the second return chamber (43) as well as to a control pressure connection, characterized in that the control chamber (42) assigned to the control slide valve (34, 102) is arranged between the second working chamber (41) and the second return chamber (43) and in that the section (55) of the control line (54) between first working chamber (39) and control chamber (42) is led through the second working chamber (41) in the region of the slide valve bore (35) of the control slide valve (34, 102).

2. Control device according to Claim 1, characterized in that the second working chamber (41) lies in particular directly alongside the control chamber (42) and a biased non-return valve (52), connected in parallel with the return stream from the hydraulic motor (86), lies in the working line (31) between control slide valve (34) and blocking block (15) and in that the piston section (67) bearing the first control edge (64) has the third control edge (66), so that these two control edges (64, 66) are assigned to the casing segment (63) between the two working chambers (39, 41) (Figure 1).

3. Control device according to Claim 2, characterized in that the first (64) and third control edge (66) are control recesses (68, 69), formed at the circumference of the piston section (67), separated from each other and open towards opposite sides, the mutual overlap of which control recesses is at most equal to or less than the width of the assigned casing segment (63).

4. Control device according to one of Claims 1 to 3, characterized in that the spring space (24) at the throttle slide valve (18) is connected to the second working chamber (41).

5. Control device according to one of Claims 3 to 4, characterized in that the first control edge (64) is formed as a control recess (68) and the third control edge (66) is formed at a longitudinal groove (69).

6. Control device according to Claim 1, characterized in that the second working chamber (41) has a connection directly, without interposition of pressure-controlling means, with the blocking valve (16) and, parallel thereto, with an outlet chamber (38), lying between first working chamber (39) and first return chamber (37), in that a second control chamber (101) is arranged between second working chamber (41) and first control chamber (42), which second control chamber is connected to the spring space (24) at the throttle slide valve (18), in that the control slide valve (102) has a booster piston section (103), interrupting in lowering position the connection between second working chamber (41) and second control chamber (101), and in that a throttle channel (108) penetrates the piston section (67) bearing the first control edge (64) and the booster piston section (103) (Figure 3).

7. Control device according to Claim 6, characterized in that the control slide valve (102) has in the region between first working chamber (39) and outlet chamber (38) an annular groove (106), from which the throttle channel (108) leaves, and in that this annular groove (106) is separated from the first working chamber (39) in raising and neutral positions and is connected to it in lowering position.

8. Control device according to Claim 6 or 7, characterized in that the throttle channel (108) in the control slide valve (102) opens out into a turned groove (105) between booster piston section (103) and second piston section (71).

9. Control device according to one or more of Claims 1 to 8, characterized in that the control slide valve (34; 102) has in the region of the first control chamber (42) a second piston section (71) with a fourth (72) and fifth control edge (73), which piston section, in a neutral position of the control slide valve (34; 102), controls a relief of the spring space (24) at the throttle slide valve (18) to the tank (48), with bypassing of the pressure-increasing means (58, 109) in the first control line (54), in raising position passes on the pressure in the working line (31) downstream of the first control edge (64) into the spring space (24) and in lowering position forces the control oil stream via the pressure-increasing means (58, 109) in the first control line (54) (Figures 1 and 3).

10. Control device according to one or more of Claims 1 to 9, characterized in that the control slide valve (34; 102) is assigned two damping chambers (36, 44), in that the latter are connected to each other via a compensating channel (45) with a throttle (46) lying therein and in that the first control chamber (42) is connected via a non-return valve (47), opening towards the compensating channel (45), to the compensating channel (45).

11. Control device according to one or more of Claims 1 to 10, characterized in that the throttle slide valve (18) is part of a 2-way valve, which is supplied with pressure medium from a variable-displacement pump (74), the controller (75) of which has a connection via a maximum-pressure selection device (79) with the control connection (81) of the control device (11) and with the load-pressure connection (83) of a second consumer circuit (84, 85), supplied in parallel from the variable displacement pump (74).

12. Control device according to one or more of Claims 1 to 11, characterized in that the throttle slide valve (18) operates in lowering position as stream control valve and in the first control line (54) a pressure-maintaining valve (109) throttles the deblocking pressure.

FIG. 1

# FIG. 2

# FIG. 3